# EUROPÄISCHE PATENTANMELDUNG

(11) **EP 1 129 613 A1**
(43) Veröffentlichungstag der Anmeldung: **05.09.2001**
(21) Anmeldenummer: 00103475.0
(22) Anmeldetag: 01.03.2000
(51) Int. Cl.: A01G 9/14

(54) **Leiste für den Folienhausbau**

(71) Anmelder: Fälschle, Friedrich, D-86759 Wechingen, Ortsteil Fessenheim (DE)
(72) Erfinder: Fälschle, Friedrich, D-86759 Wechingen, Ortsteil Fessenheim (DE)
(74) Vertreter: Beetz & Partner Patentanwälte

(57) **Zusammenfassung**

Eine Leiste für den Folienhausbau hat eine erste Nut (1, 3) zur Befestigung einer ersten Folie oder eines ersten Gewebes (11, 13) so, daß sie bzw. es bezogen auf die Einbaulage nach unten von der Leiste (10) weg verläuft.

## Beschreibung

Die Erfindung betrifft eine Leiste für den Folienhausbau gemäß dem Oberbegriff des unabhängigen Anspruchs.

Folienhäuser werden beispielsweise als Gewächshäuser verwendet. Sie weisen eine Tragestruktur auf, die allgemein aus festen Leisten aufgebaut ist. An der Tragestruktur sind Folien oder ähnliches befestigt, die den flächigen Witterungsschutz bilden. Vertikale Stützen, sogenannte "Binder", tragen an ihnen befestigte Querbalken, Regenrinnen und ähnliches. Darüber ruht das Dach, dessen Neigung das Abfließen von Wasser bzw. Abrutschen von Schnee bewirkt.

Eine bei der Fa. Götsch & Fälschle bisher benutzte Leiste ist für den Einsatz unterhalb der Traufkante des Folienhauses ausgelegt. Die Traufkante ist die Kante zwischen vertikaler Seitenwand und schräger Dachfläche. Die Leiste ist ein Hohlprofil, das von der Traufkante vertikal nach unten beabstandet angebracht ist. Die vertikale Beabstandung erfolgt, um im Winter das Einrutschen von Schnee in die Regenrinne zu verhindern. Dadurch, daß die Regenrinne nach unten beabstandet ist, rutscht Schnee ggf. bzw. bis zu einem bestimmten Ausmaß über die Regenrinne hinweg ab. Die Leiste weist oben eine Klemmkammer auf, mit der die Unterkante der die Dachschräge bildenden Folie an der Leiste befestigt werden kann. Darüber hinaus weist sie eine Hohlstruktur auf, um der Leiste Stabilität zu verleihen. Die Leiste arbeitet mit einer getrennten Lüftungsleiste zusammen. Die Lüftungsleiste ist eine ebenfalls quer verlaufende Leiste, die die Oberkante der Folienseitenwand des Folienhauses (Gewächshauses) bildet. Die Lüftungsleiste kann beispielsweise durch einen Seilzugmechanismus bis unter die besprochene Leiste gezogen werden. Sie zieht dann die in ihr eingeklemmte Seitenwandfolie mit hoch, so daß die Seitenwand geschlossen ist. Wenn Lüftung gewünscht ist, kann die Lüftungsleiste abgesenkt werden, so daß im oberen Bereich der Seitenwand eine die Lüftung bewirkende Öffnung entsteht.

Die Aufgabe der Erfindung ist es, eine Leiste für den Folienhausbau anzugeben, die das Anbringen von Folien zur Belüftung des Folienhauses vom Boden her erlaubt.

Diese Aufgabe wird mit den Merkmalen des Anspruchs 1 gelöst. Abhängige Ansprüche sind auf bevorzugte Ausführungsformen der Erfindung gerichtet.

Eine erfindungsgemäße Leiste für den Folienhausbau weist eine in Längsrichtung der Leiste verlaufende Nut auf, die zur Befestigung einer ersten Folie oder eines ersten Gewebes ausgelegt ist, wobei die Folie bzw. das Gewebe bezogen auf die Einbaulage der Leiste von dieser nach unten weg verläuft, wenn sie angebracht ist.

Die Leiste kann eine weitere Nut aufweisen, beispielsweise eine Klemmkammer, an der eine weitere Folie befestigt werden kann, die bezogen auf die Einbaulage der Leiste quer oder schräg nach oben oder senkrecht nach oben von der Leiste weg verläuft, wenn sie angebaut ist. Die erste Nut liegt an der Leiste vorzugsweise im unteren Bereich (untere Hälfte), die zweite Nut liegt an der Leiste vorzugsweise im oberen Bereich (obere Hälfte).

Die beschriebene Leiste dient damit zur Befestigung einer Folie für eine Folienwand, die von der Leiste aus nach unten verläuft. Von unten weg kann sie gerafft werden, beispielsweise ziehharmonikaartig oder durch Aufrollen, so daß von unten weg über die Länge der Seitenwand hinweg ein Schlitz beliebiger Höhe erzeugt werden kann, so daß auch die Lüftungsbedingungen geeignet eingestellt werden können.

Die Leiste kann auch zum Zusammenwirken mit der schon beschriebenen Lüftungsleiste ausgelegt sein. Sie ist dann zum variablen Einsatz für unterschiedliche Lüftungstechnologien geeignet. Wenn eine Folie in die erste Nut eingeschoben wird, kann diese von unten aufgerollt werden, so daß sich ein Lüftungsschlitz unten längs des Bodens ergibt. Wenn die beschriebene erste Nut dagegen nicht genutzt wird, kann die Leiste mit der Lüftungsleiste zusammenwirken, so daß sich durch deren Absenken ein Lüftungsschlitz von der Leiste aus nach unten ergibt.

Für verschiedene Lüftungstechnologien wird damit nur noch eine einzige Leiste benötigt. Es müssen nicht mehrere Werkzeuge hergestellt oder mehrere Leistentypen vorrätig gehalten werden. Es kann nicht zu Verwechslungen kommen. Für besondere Einsatzzwecke ist es auch denkbar, beide Lüftungstechnologien kombiniert zu verwenden. Je nach Bedarf kann dann von oben bzw. von unten gelüftet werden. Auch Umrüstungen sind möglich, ohne daß eine Leiste ausgetauscht werden müßte.

Bezugnehmend auf die Zeichnungen werden nachfolgend einzelne Ausführungsformen der Erfindung beschrieben. Es zeigen:
- Fig. 1: das Profil einer Ausführungsform der erfindungsgemäßen Leiste,
- Fig. 2a bis 2c: die unterschiedlichen Einsatzarten der erfindungsgemäßen Leiste,
- Fig. 3a und 3b: die unterschiedlichen Lüftungsmöglichkeiten, und
- Fig. 4: ein Beispiel einer Lüftungsleiste.

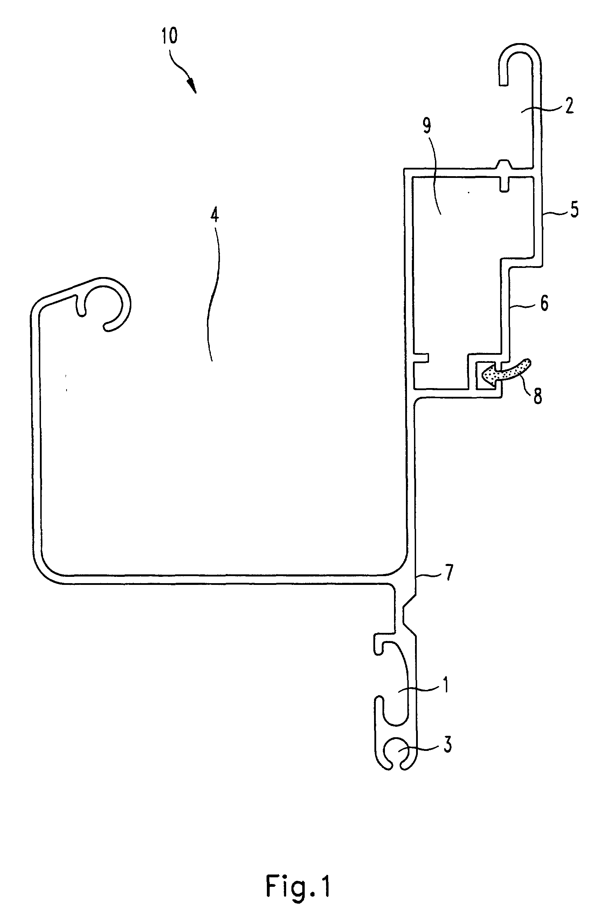

Fig. 1 zeigt das Profil einer erfindungsgemäßen Ausführungsform einer Leiste 10. Das Profil der Leiste ist vorzugsweise homogen, d.h. es ändert sich nicht längs der Länge der Leiste. Die Leiste dient dem Folienhausbau und insbesondere dem Gewächshausbau. Sie kann ein Hohlprofil sein, das beispielsweise Aluminium und/oder Kunststoff aufweist. Einzelne Leisten 10 können Längen von beispielsweise 6 m haben. Durch geeignete Verbindungsstücke können sie miteinander am Stoß verbunden werden, so daß beliebige Gewächshauslängen abgedeckt werden können. Die Leiste kann sich an oder unterhalb der Traufkante des Gewächshauses/Folienhauses befinden.

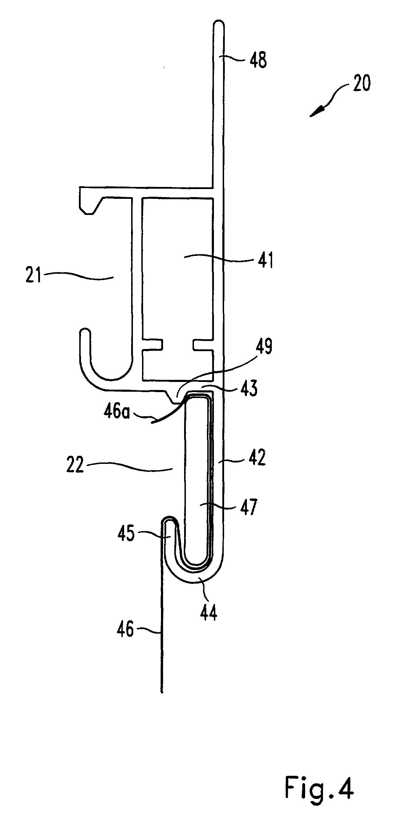

Das Profil weist eine erste Nut 1 oder 3 auf. In der Nut 1, 3 kann eine Folie oder ein Gewebe befestigt werden. Die Nut kann eine Kedernut sein (gezeichnet bei Bezugsziffer 3), in die in eine Kederschnur eingedrückt wird, die fest mit einer Folie verschweißt sein kann. Es kann sich bei der Nut auch um eine Klemmkammer 1 handeln, in die die Folie mittels eine Klemmkörpers eingeklemmt wird. Genaueres hierzu wird bezugnehmend auf Fig. 4 beschrieben.

Die erste Nut 1, 3 kann in der unteren Hälfte der Leiste 10 bzw. unten an der Leiste 10 vorgesehen sein.

In diesem Zusammenhang wird darauf hingewiesen, daß sich Angaben wie unten bzw. oben auf die Einbaulage der Leiste beziehen. Gleiches gilt für außen bzw. innen (außen vom Gewächshaus weg zeigend, innen zum Gewächshausinneren hin zeigend). In Fig. 1 ist die rechte Seite die Innenseite, während die linke Seite die Außenseite ist.

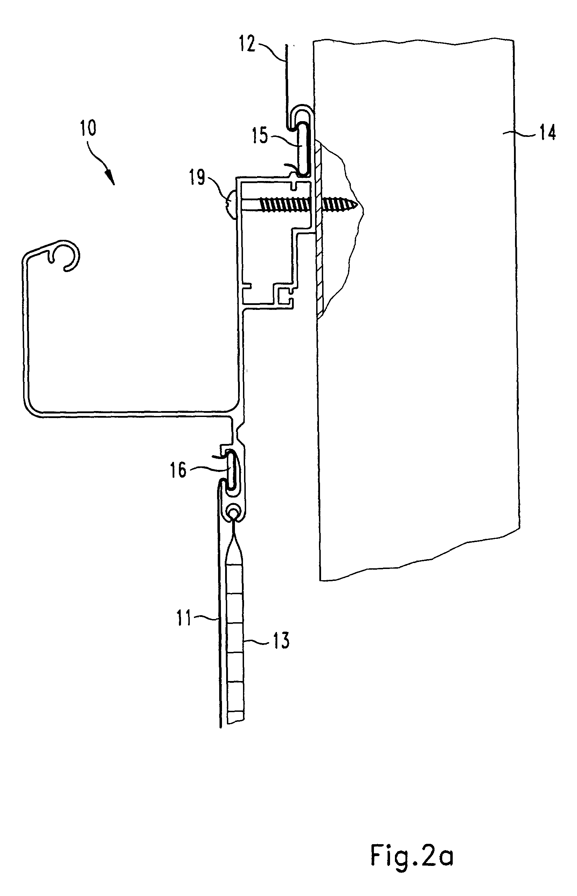

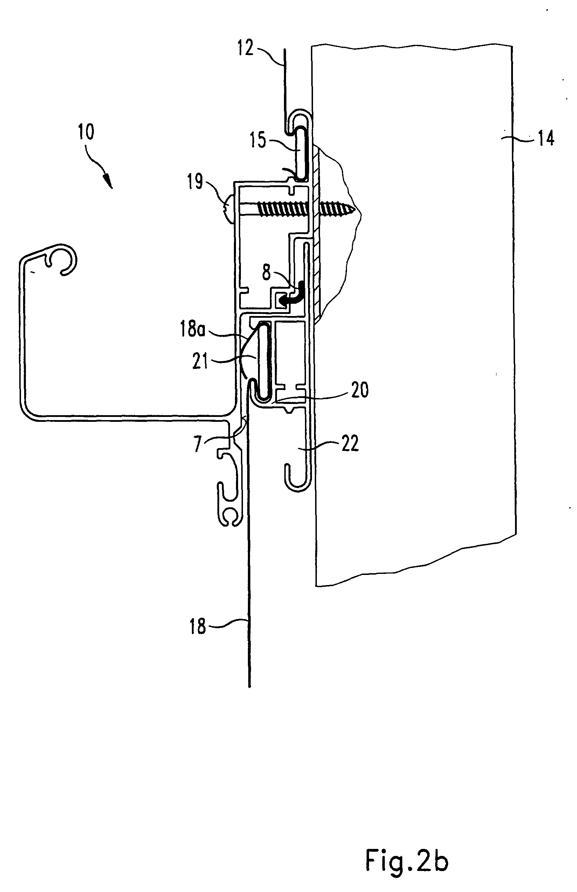

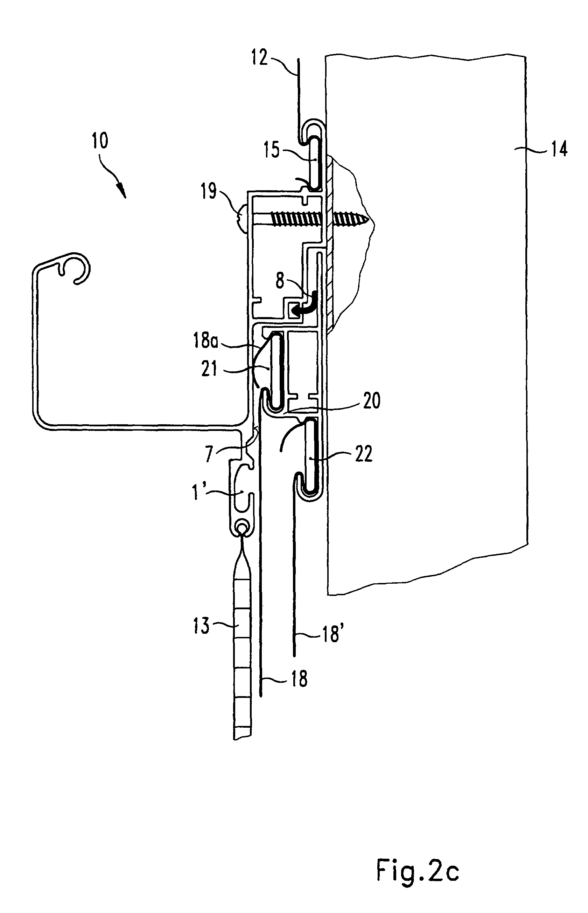

Es kann eine zweite Nut 2 vorgesehen sein, an der eine zweite Folie 12 (siehe Fig. 2) befestigbar ist. Die zweite Nut 2 kann ebenfalls eine sich in Längsrichtung der Leiste erstreckende Klemmkammer sein. Die zweite Folie kann, wenn sie eingebaut ist, sich horizontal oder vertikaler als horizontal erstrecken. Insbesondere kann sie auch vertikal verlaufen, bis sie ausgehend von der zweiten Nut 2 die Traufkante erreicht hat. Von dort läuft sie schräg nach oben bis zum First des Daches des Folienhauses. Die zweite Nut 2 kann in der oberen Hälfte der Leiste 10 oder oben an ihr vorgesehen sein.

Die Leiste 10 weist im Profil einen nach oben offenen Bereich 4 auf. Es handelt sich bei ihm um eine Regenrinne, die das von oben vom Dach ablaufende Wasser aufnimmt und kontrolliert abführt. In vertikaler Richtung kann sich der offene Bereich bzw. die Regenrinne 4 zwischen erster Nut 1, 3 (unten) und zweiter Nut 2 (oben) befinden. In horizontaler Richtung kann der Mittenbereich der Regenrinne 4 weiter außen liegen als die erste Nut 1, 3 und/oder die zweite Nut 2. Die Nut links oben im Profile der Regenrinne 4 dient zur Stabilisierung der Seitenwand bzw. des gesamten Profils.

Wie in Fig. 1 gezeigt, kann die Leiste 10 eine dritte Nut 1, 3 aufweisen, die zusätzlich zur ersten Nut 1, 3 vorgesehen ist. Die dritte Nut dient der Aufnahme einer nach unten verlaufenden Folie oder eines nach unten verlaufenden Gewebes. Wenn sowohl erste als auch dritte Nut vorgesehen sind, kann in der einen beispielsweise eine geschlossene Folie angebracht werden. Es kann sich um eine doppelwandige Folie oder um eine Noppenfolie (mit einzelnen Luftkammern) handeln. Diese Folie kann in einer Kedernut 3 oder mittels eines Klemmkörpers in der Klemmkammer 1 befestigt werden. In der anderen der beiden Nuten 1, 3 kann beispielsweise ein Gewebe befestigt werden, insbesondere ein Insektenschutzgewebe oder -gitter. Es kann sich um Saran-Gewebe handeln. Die beiden Nuten 1, 3 können (wie in Fig. 1 gezeigt) vertikal voneinander beabstandet angebracht sein. Sie können zusätzlich oder stattdessen auch horizontal voneinander beabstandet vorgesehen sein, beispielsweise indem sie nebeneinander an der Unterseite der Regenrinne 4 angebracht sind. Anders als in Fig. 1 gezeigt kann die als Klemmkammer ausgebildete Nut 1 auch nach innen offen sein. Eine Kedernut 3 kann auch zur Seite hin offen sein.

Die Leiste weist einen ersten Bereich 5 zur Befestigung der Leiste an einer Tragestruktur des Folienhauses auf. Beispielsweise kann die Leiste 10 an einer vertikalen Stützte, einem sogenannten Binder 14, befestigt werden. Die Befestigung kann durch Schrauben erfolgen. Der erste Bereich 5 kann ein vertikaler Abschnitt im Profil sein, der weitestmöglich innen liegt. Er kann, wie in Fig. 1 gezeigt, im Profil der Leiste in der oberen Hälfte bzw. oben liegen.

Der erste Bereich 5 kann eine Wand einer abgeschlossenen Kammer 9 des Profils sein. Der erste Bereich 5 kann auch eine Wand der zweiten Nut 2 sein. Die innere Wand der Regenrinne 4 kann ebenfalls eine Wand der abgeschlossenen Kammer 9 des Profils sein. Die innenliegende Wand der Regenrinne 4 kann bezüglich der Kammer 9 eine gegenüberliegende Wand zu der Wand sein, die den ersten Bereich 5 bildet.

Das Profil kann einen zweiten Bereich 6 aufweisen, der unter dem ersten Bereich 5 liegt und seitlich gegen diesen versetzt ist. Der seitliche Versatz kann 5 mm oder mehr betragen. Der zweite Bereich 6 erstreckt sich nach unten. Die vertikale Erstreckung kann mindestens 1,5 cm, vorzugsweise mindestens 2,5 cm betragen. Der zweite Bereich 6 kann zur Anlage oder Befestigung einer Dichtlippe 8 ausgelegt sein. Fig. 1 zeigt eine Ausführungsform, in der im zweiten Bereich 6 eine Dichtlippe 8 vorgesehen ist. Es handelt sich beispielsweise um ein flexibles Kunststoffmaterial, das in eine Führung im Profil der Leiste 10 eingedrückt ist. Der Zweck des zweiten Bereichs 6 wird bezugnehmend auf Fig. 2b erläutert.

Die Leiste 10 kann darüber hinaus einen Anlagebereich 7 zur Anlage einer Folienlippe 18a aufweisen. Vorzugsweise liegt der Anlagebereich 7 unter dem ersten Bereich 5 bzw. unter dem zweiten Bereich 6. Er kann gegen den ersten Bereich 5 und auch gegen den zweiten Bereich 6 in horizontaler Richtung versetzt sein. Der horizontale Versatz kann gegenüber dem ersten Bereich 5 2 cm oder mehr betragen. Der Anlagebereich kann nach unten bzw. vertikal verlaufen. Seine Vertikalerstreckung kann 4 cm oder mehr, vorzugsweise 6 cm oder mehr, betragen. Der Anlagebereich 7 kann eine Wandung der ersten und/oder der dritten Nut 1, 3 bilden. Vorzugsweise bildet er dann eine innenliegende Wandung dieser Nut.

Fig. 2a zeigt eine erste Einsatzart der in Fig. 1 näher bezeichneten Leiste 10. Prinzipiell bedeuten in allen Figuren gleiche Bezugsziffern gleiche Bereiche bzw. Bauteile. 14 bezeichnet eine vertikal verlaufende Stütze bzw. Binder eines Folienhauses. An ihm wird die Leiste 10 beispielsweise durch Schrauben 19 befestigt. Über die Seitenwand eines Gewächshauses verteilt kann beispielsweise alle 2 m ein Binder 14 stehen. Pro Binder kann eine Schraube 19 für die Leiste 10 vorgesehen sein. Wenn eine Leiste 10 6 m lang ist, würde sie sich über drei Binder erstrecken.

Oben ist mittels eines Klemmkörpers 15 in die als Klemmkammer ausgelegte zweite Nut eine Folie 12 eingeklemmt. Sie läuft nach oben zur Traufkante und von dort schräg nach oben zum Dachfirst. Unten sind in den beiden Nuten 1 und 3 eine Folie 13 und ein Netz 11 befestigt. 13 kann beispielsweise eine Keder-Noppenfolie sein, die oben in der Kedernut 3 befestigt ist und die von unten vom Boden her durch einen geeigneten, nicht gezeigten Mechanismus nach oben aufgerollt werden kann, so daß sich unten am Boden ein Lüftungsschlitz ergibt. 11 bezeichnet eine weitere Folie oder ein Gitter, beispielsweise ein Insektenschutzgitter, das in die als Klemmkammer ausgebildete Nut 1 mittels eines Klemmkörpers 16 eingeklemmt ist. Es ergibt sich somit eine Kombination aus feststehendem Insektenschutzgitter 11 und von unten hochrollbarer Folienwand 13.

Fig. 2b zeigt eine weitere Verwendungsweise der Leiste 10, die unabhängig von oder ganz oder teilweise kombiniert mit der Verwendungsweise aus Fig. 2a möglich ist. Zusätzlich zur Leiste 10 ist eine weitere Leiste 20, das schon eingangs erwähnte und in Fig. 4 gezeigte sog. Lüftungsprofil, vorgesehen. Es ist vertikal beweglich. Es kann durch einen (nicht gezeigten) Mechanismus, beispielsweise einen Seilzugmechanismus, vom Boden nach oben bis in die gezeigte Position gezogen werden. Es kann in jeder beliebigen vertikalen Position gehalten werden. Das Profil weist zwei Nuten 21, 22 auf, in die jeweils Folien eingeklemmt werden können. Mit dem Lüftungsprofil 20, das an der Außenseite des Binders 14 läuft, können damit eine oder mehrere Folien von unten nach oben gezogen werden. Wenn das Profil 20 ganz oben wie in Fig 2b gezeigt anliegt, ist die Seitenwand geschlossen. Wenn es dagegen abgesenkt wird, ergibt sich ein Schlitz in der Seitenwand, der sich von der Leiste 10 aus nach unten erstreckt.

Fig. 2b zeigt die Dichtlippe 8, die an einem Anlagebereich des Lüftungsprofils 20 anliegt. Es ergibt sich dadurch der dichte Sitz zwischen Profil 10 und Lüftungsprofil 20 und damit eine insgesamt dichte Seitenwand des Folienhauses. Hierbei ist insgesamt jedoch zu beachten, daß die Folienlängen sich aufgrund unterschiedlicher Temperaturen und damit einhergehender unterschiedlicher Wärmeausdehnungen ändern können. Der Längenunterschied kann einige Zentimeter ausmachen, je nachdem, ob beispielsweise -10° oder +20° herrschen. Es ist deshalb wünschenswert, daß die Dichtlippe 8 von der Seite her an einem vertikalen, sich in vertikaler Richtung erstreckenden Bereich des Dichtungsprofils 20 anliegt, so daß aufgrund der vertikalen Erstreckung dieses Bereiches unterschiedliche Längen der Folien aufgefangen werden können. Fig. 2b zeigt eine Ausführungsform, bei der die Dichtlippe 8 am Profil 10 befestigt ist und an einem vertikalen Bereich des Lüftungsprofils 20 anliegt. Die Verhältnisse können aber auch anders herum gewählt werden. Das Profil 10 weist dann im zweiten Bereich 6 keine Dichtlippe 8 auf. Der zweite Bereich 6 ist lediglich zur Anlage einer Dichtlippe ausgelegt, die am Lüftungsprofil 20 befestigt ist.

Der Anlagebereich 7 des Profils 10, der an der Innenseite des Profils vorgesehen ist, kann mit einer Folienlippe 18a einer Folie 18 wie gezeigt zusammenwirken. Die Folienlippe 18a liegt am Anlagebereich 7 an und wirkt dadurch ähnlich wie die Dichtlippe 8. Es ergibt sich dadurch eine weitere Abdichtung zwischen Lüftungsprofil 20 und Profil 10, so daß die Dichtigkeit insgesamt verbessert ist. Der Vorteil wird insbesondere bei extremen Temperaturschwankungen merklich. Wenn sich beispielsweise aufgrund extrem niedriger Temperaturen die Folien stark verkürzt haben, kann es sein, daß der Anlagebereich der Lüftungsleiste 20 die Dichtlippe 8 im Profil 10 nicht mehr erreicht. Wenn der Anlagebereich 7 ausreichend groß ausgebildet ist, wird dieser jedoch noch von der Folienlippe 18a erreicht, so daß trotz fehlender Funktion der Dichtlippe 8 noch eine Abdichtung gegeben ist.

Die Einsatzweisen der Figuren 2a und 2b können ganz oder teilweise miteinander kombiniert werden. Eine teilweise Kombination kann beispielsweise so aussehen, daß in die erste Nut des Profils 10 ein Insektenschutzgitter eingeklemmt ist (Insektenschutzgitter 11 und Klemmkörper 16 in Fig. 2a), während eine bewegliche Folienwand mittels Lüftungsprofil 20 bewegt bzw. gehalten wird.

Fig. 2c zeigt eine weitere kombinierte Einsatzweise. Am Lüftungsprofil 20 sind in der gezeigten Ausführungsform zwei Folien 18, 18' festgeklemmt, die mittels des Lüftungsprofils abgesenkt werden können. Eine weitere Folie 13 ist an der ersten Nut 3 der Leiste 10 befestigt, in der gezeigten Ausführungsform mittels eines Keders. Bei der Folie 13 kann es sich um eine Isolierfolie handeln, beispielsweise um eine Noppenfolie. Die Folie 13 kann doppelwandig und mit festen Luftkammern ausgestattet ausgebildet sein. Die Benutzung kann hier so erfolgen, daß die an der Leiste 10 befestigte Folie sommers dauerhaft hochgerollt ist, während sie winters heruntergelassen ist und so zu einer guten thermischen Isolierung und damit zur Energieeinsparung beiträgt. Der Vollständigkeit halber wird unabhängig vom eben beschriebenen Zusammenhang auf die in Fig. 2c modifiziert dargestellte Nut 1' verwiesen. Sie ist hier nicht nach außen offen, sondern nach innen offen gezeigt. In der Ausführungsform der Fig. 2c kann in die Nut 1' eine weitere Folie oder auch ein Insektenschutzgitter eingeklemmt werden. Um in der Ausführungsform der Fig. 2c die Folienhauslüftung bewirken zu können, kann beispielsweise die Folie 13 bis unter die Leiste 10 hochgerollt und das Lüftungsprofil 20 entsprechend der gewünschten Öffnung in der Wand unter die sich ergebende Rolle 33 der Folie 13 abgesenkt werden. Wenn die Folie 13 nicht weitestmöglich hochgerollt wird, wären dementsprechend das Lüftungsprofil 20 und damit die Folien 18, 18' weiter abzusenken.

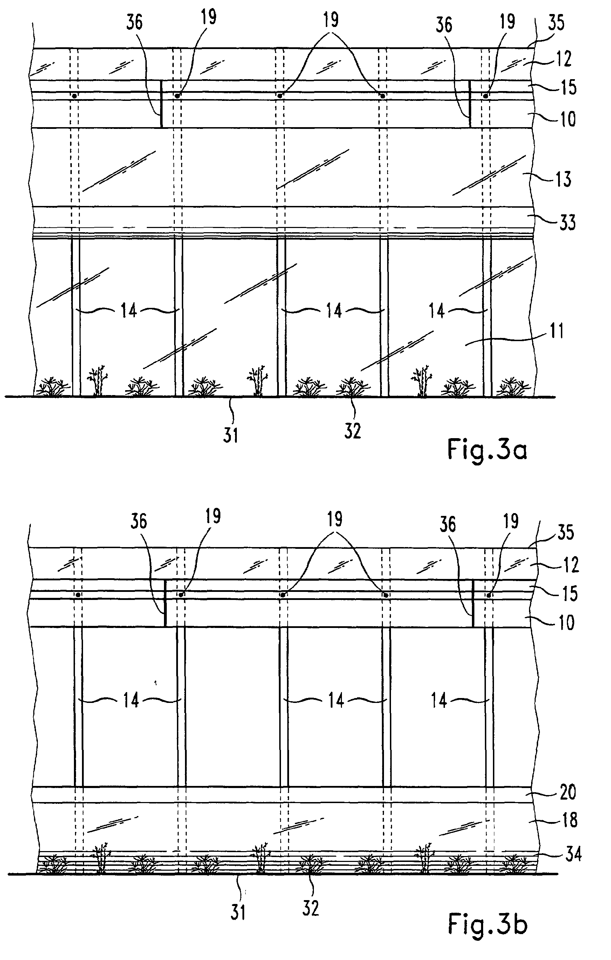

Fig. 3a zeigt die Verwendungsweise der Leiste 10 gemäß Fig. 2a. 31 ist der Boden, 32 deutet Pflanzen an, 14 sind (nicht maßstäblich beabstandete) Binder. 35 symbolisiert die Traufkante. Sie kann durch ein Rundprofil gebildet werden, über das die Folie hinweg umgeleitet wird (oberhalb der Traufkante 35 schräg nach oben zum (nicht gezeigten) Dachfirst, unterhalb der Traufkante 35 mehr oder minder vertikal nach unten zur Leiste 10). Der Abstand zwischen Traufkante 35 und Leiste 10 kann 50 cm oder weniger betragen. Von der Leiste 10 nach unten erstreckt sich zum einen die Folie 13, die aber von unten vom Boden 31 weg nach oben aufgerollt ist. Auf halber Höhe wird die Rolle 33 der aufgerollten Folie 13 gehalten. Über die gesamte Höhe der Seitenwand hinweg kann beispielsweise das Insektenschutzgitter 11 liegen. 36 bezeichnet Stöße, an denen einzelne Leisten aufeinandertreffen und mittels eines Verbinders mechanisch und funktionell miteinander verbunden sind.

Fig. 3b zeigt die Verwendungsweise der Leiste 10 gemäß Fig. 2b. Auch hier stehen die Binder 14 auf dem Erdboden 31 auf. Das Lüftungsprofil 20 ist durch einen (nicht gezeigten) Mechanismus abgesenkt und wird auf einer bestimmten Höhe gehalten. Von der Lüftungsleiste 20 aus nach unten erstreckt sich die Folie 18, die auf dem Boden außerhalb der Binder 14 ziehharmonikaartig aufliegt. Wie schon weiter oben erläutert kann zusätzlich beispielsweise noch ein Insektenschutzgitter 11 vorgesehen sein, das in der ersten Nut 1 befestigt ist.

Nachfolgend werden einzelne typische bzw. bevorzugte Abmessungen der Leiste 10 gegeben: Gesamthöhe > 12 cm und/oder < 25 cm, vorzugsweise zwischen 15 und 20 cm, Gesamtbreite < 20 cm und/oder > 8 cm, vorzugsweise zwischen 10 und 15 cm, Breite der Regenrinne zwischen 6 und 12 cm, Breite der Kammer 9 zwischen 2 und 4 cm, Höhe der Kammer 9 zwischen 3 und 7 cm, vertikale Abmessung des ersten Bereichs 5 > 1,5 cm und/oder < 3 cm.

Fig. 4 zeigt eine Lüftungsleiste 20, wie sie aus der EP 0 331 810 B1 bekannt ist. Sie wird hier beschrieben, da das Prinzip der Klemmkammer auch in der Leiste 10 verwendet werden kann. Das Profil 20 weist zwei Klemmkammern 21, 22 auf. Es weist eine geschlossene Kammer 41 auf, die der Stabilisierung des Profils über dessen Länge hinweg dient. Eine Klemmkammer (z.B. 22) weist Stirnwände 43 und 44, eine geschlossene Seitenwand 42 und eine teilweise offene Seitenwand 45 auf. Die der abgehenden Folie zugewandte Stirnwand 44 kann zumindest innen gerundet bzw. halbrund geformt sein. Die teilweise offene Seitenwand 45 kann einen ersten Ansatz 45 aufweisen, der an der der abgehenden Folie zugewandten Stirnwand 44 ansetzt. An der anderen Stirnwand 43 kann ein zweiter Ansatz 49 vorgesehen sein.

Zur Befestigung der Folie wird diese mittels eines Klemmkörpers 47 in die Nut 22 bzw. Klemmkammer 22 eingedrückt. Der Klemmkörper ist so bemessen, daß er in die Klemmkammer 22 eingeschoben werden kann. Er drückt dann die Folie 46 in diese hinein. Die Länge der Folie ist so bemessen, daß sie den Klemmkörper längs des ersten Ansatzes 45, der gerundeten Stirnwand 44, der geschlossenen Seitenwand 42, der Stirnwand 43 und des zweiten Ansatzes 49 umgibt. Es kann dann noch eine Folienlippe 46a herausstehen, die bei geeigneter Dimensionierung der Folienlippe 46a bzw. Anbringung der Nut bzw. Klemmkammer 22 zur weiteren Abdichtung wie bezugnehmend auf Fig. 2b beschrieben dienen kann.

48 ist ein vertikaler Bereich des Lüftungsprofils 20, der entweder zur Anlage einer Dichtlippe des Profils 10 ausgelegt ist oder an dem selbst eine Dichtlippe angebracht sein kann, die mit der Leiste 10 zusammenwirkt.

Eine Klemmkammer 1, 3 oder 2 (Nut 1 bis 3) des Profils 10 kann wie die eben beschriebene Klemmkammer aufgebaut sein.

Typische bzw. bevorzugte Abmessungen des Lüftungsprofils 20 bzw. einer Klemmkammer können einzeln wie folgt sein:

Gesamthöhe des Profils zwischen 9 und 13 cm, Gesamtbreite des Profils zwischen 1,5 und 3,5 cm, Länge des Bereichs 48 zwischen 2 und 4 cm, vertikale Erstreckung einer Klemmkammer (Innenmaß) zwischen 1,5 und 4 cm, horizontale Erstrekkung einer Klemmkammer (Innenmaß) zwischen 0,4 und 0,9 cm, Länge des Ansatzes 45 zwischen 3 und 9 mm, Länge des Ansatzes 49 1 bis 3 mm.

Die vertikale Abmessung des Klemmkörpers 47 ergibt sich aus der vertikalen Abmessung der Klemmkammer (Innenmaß) reduziert um das Maß des zweiten Ansatzes 49. Beim Eindrücken wird es zunächst unten in die Klemmkammer eingeschoben und dann oben hinter den Ansatz 49 gedrückt. Die Steifigkeit der Folie und später der Zug darauf sorgen dafür, daß der Klemmkörper 47 in der Klemmkammer bleibt bzw. daß er gegen die von den Folien abgewandte Stirnseite 43 gedrückt wird. Aufgrund von Reibungskräften verbleibt die Folie 46 eingeklemmt zwischen Klemmkörper 47 und Klemmkammer 22.

Allgemein kann eine Folienhauswand so ausgebildet sein, daß deren Unterkante vertikal beweglich ist. Die Oberkante einer oder mehrerer der Folien der Folienhauswand kann dann beispielsweise von einem wie vorstehend beschrieben ausgebildeten Profil 10 gehalten werden. Es können alle Folien oder nur einzelne Folien der Wand an ihrer unteren Kante beweglich sein. Die Wand kann mehr oder minder vertikal verlaufen. Sie kann die vertikale Seitenwand bzw. ein Teil davon sein, oder sie kann auch ein Teil des Daches sein. Der Wandbereich, dessen zumindest eine Folie von unten weg bewegbar ist, kann am zu bauenden Folienhaus innen oder außen liegen.

## Patentansprüche

1. Leiste für den Folienhausbau,
gekennzeichnet durch
eine erste in Längsrichtung der Leiste verlaufende Nut (1, 3) zur Befestigung einer ersten Folie oder eines ersten Gewebes (11, 13), die bzw. das bezogen auf die Einbaulage nach unten von der Leiste (10) weg verläuft.

2. Leiste nach Anspruch 1, **dadurch gekennzeichnet**, daß sie ein länglicher Körper mit konstanter Querschnittsform ist.

3. Leiste nach Anspruch 1 oder 2, **dadurch gekennzeichnet**, daß sie ein Hohlprofil ist.

4. Leiste nach einem der vorherigen Ansprüche, **dadurch gekennzeichnet**, daß sie Aluminium und/oder Kunststoff aufweist.

5. Leiste nach einem der vorherigen Ansprüche, gekennzeichnet durch eine zweite in Längsrichtung der Leiste verlaufende Nut (2) zur Befestigung einer zweiten Folie (12), die bezogen auf die Einbaulage quer oder weiter nach oben als quer von der Leiste weg verläuft.

6. Leiste nach einem der vorherigen Ansprüche, **dadurch gekennzeichnet**, daß die erste Nut (1, 3) bezogen auf die Einbaulage der Leiste unterhalb der Mitte der Leiste verläuft.

7. Leiste nach einem der vorherigen Ansprüche, **dadurch gekennzeichnet**, daß die zweite Nut (2) bezogen auf die Einbaulage der Leiste oberhalb der Mitte der Leiste verläuft.

8. Leiste nach einem der vorherigen Ansprüche, gekennzeichnet durch einen bezogen auf die Einbaulage nach oben offenen Bereich (4) ihres Profils, der als Regenrinne dienen kann.

9. Leiste nach einem der vorherigen Ansprüche, gekennzeichnet durch eine dritte in Längsrichtung der Leiste verlaufende Nut (1, 3) zur Befestigung einer dritten Folie oder eines zweiten Gewebes (11, 13), die bzw. das bezogen auf die Einbaulage nach unten von der Leiste (10) weg verläuft.

10. Leiste nach einem der vorherigen Ansprüche, gekennzeichnet durch einen ersten Bereich (5) zur Befestigung der Leiste an einem Binder (14) und einen unter dem ersten Bereich liegenden zweiten Bereich (6), der vertikal verläuft und seitlich gegen den ersten Bereich versetzt ist und eine vertikale Erstreckung von mindestens 1,5 cm, vorzugsweise mindestens 2,5 cm hat.

11. Leiste nach Anspruch 10, **dadurch gekennzeichnet**, daß der zweite Bereich (6) zur Anlage oder Befestigung einer Dichtlippe (8) ausgelegt ist.

12. Leiste nach einem der vorherigen Ansprüche, gekennzeichnet durch einen vertikal verlaufenden Anlagebereich (7) zur Anlage einer Folienlippe (18a).

13. Leiste nach Anspruch 12, **dadurch gekennzeichnet**, daß der Anlagebereich (7) eine Wandung der ersten Nut (1, 3) bildet.

14. Leiste nach Anspruch 9 und 12, **dadurch gekennzeichnet**, daß der Anlagebereich (7) eine Wandung der dritten Nut (1, 3) bildet.

15. Leiste nach einem der Ansprüche 12 bis 14, **dadurch gekennzeichnet**, daß der Anlagebereich (7) eine vertikale Erstreckung von mindestens 4 cm hat.

16. Leiste nach einem der Ansprüche 12 bis 15 und nach Anspruch 10, **dadurch gekennzeichnet**, daß der Anlagebereich (7) unter dem zweiten Bereich (6) liegt und seitlich gegen ihn versetzt ist.

17. Leiste nach einem der vorherigen Ansprüche, **dadurch gekennzeichnet**, daß die erste Nut eine Kedernut (3) ist.

18. Leiste nach einem der vorherigen Ansprüche, **dadurch gekennzeichnet**, daß die erste Nut eine Klemmkammer (1) zum Einklemmen einer Folie oder eines Gewebes mittels eines Klemmkörpers ist.

19. Leiste nach einem der vorherigen Ansprüche, **dadurch gekennzeichnet**, daß sie für die horizontale Montage in der oberen Hälfte einer Seitenwand eines Folienhauses vorgesehen ist.

20. Leiste nach einem der vorherigen Ansprüche, **dadurch gekennzeichnet**, daß sie für die horizontale Montage an oder unterhalb der Traufkante einer Seitenwand eines Folienhauses vorgesehen ist.

21. Folienhauswand, bei der die Wandfläche durch eine oder mehrere Folien (11, 13, 18) gebildet wird,
**dadurch gekennzeichnet**, daß
die Unterkante zumindest einer Folie (13) der Folienhauswand vertikal beweglich ist.

22. Folienhauswand nach Anspruch 21, **dadurch gekennzeichnet**, daß eine Folie der Folienhauswand von der Unterkante her nach oben aufrollbar (33) ist.

23. Folienhauswand nach Anspruch 21 oder 22, **dadurch gekennzeichnet**, daß die Oberkante einer Folie der Folienhauswand an einer Leiste (10) nach einem der Ansprüche 1 bis 20 befestigt ist.

24. Folienhauswand nach einem der Ansprüche 21 bis 23, **dadurch gekennzeichnet**, daß die Oberkante zumindest einer Folie (18, 18') der Folienhauswand vertikal beweglich ist.

25. Folienhaus mit einer Folienhauswand, die zumindest bereichsweise nach einem der Ansprüche 21 bis 24 ausgebildet ist.
